# EUROPÄISCHE PATENTSCHRIFT

(11) **EP 1 952 508 B1**
(45) Veröffentlichungstag und Bekanntmachung des Hinweises auf die Patenterteilung: **06.03.2013**
(21) Anmeldenummer: 06819724.3
(22) Anmeldetag: 23.11.2006
(51) Int. Cl.: H02K 3/50, H02K 3/12

(54) **ANORDNUNG MIT GENERATORSTÄBEN FÜR EINEN STÄNDER EINES ELEKTRISCHEN GENERATORS**
APPARATUS WITH CONDUCTOR BARS FOR A STATOR OF AN ELECTRIC GENERATOR
DISPOSITIF AVEC BARRES DE CONDUCTEURS POUR UN STATOR D'UN GÉNÉRATEUR ÉLECTRIQUE

(30) Priorität: 24.11.2005 EP 05025685
(43) Veröffentlichungstag der Anmeldung: 06.08.2008
(73) Patentinhaber: SIEMENS AKTIENGESELLSCHAFT, 80333 München (DE)
(72) Erfinder: KOWALSKI, Waldemar, 45472 Mülheim an der Ruhr (DE); LEHMANN, Christoph, 47506 Neukirchen-Vluyn (DE); RICHTER, Claus-Georg, 45239 Essen-Werden (DE); SPIESS, Karlheinz, 47445 Moers (DE)
(86) Internationale Anmeldenummer: PCT/EP2006/068848
(87) Internationale Veröffentlichungsnummer: WO 2007/060207

(56) Entgegenhaltungen:
- WO-A-01/47089
- US-A- 4 385 254
- US-A- 5 789 840
- US-A1- 2002 047 454
- US-B1- 6 208 058
- OSTOVIC C ET AL: "FINITE ELEMENT SOFTWARE FOR 3-D FIELD CALCULATIONS IN ELECTRICAL ENGINEERING" ABB REVIEW, ABB ASEA BROWN BOVERI, ZURICH, CH, Nr. 6/7, 1996, Seiten 29-36, XP000636214 ISSN: 1013-3119

## Beschreibung

Die Erfindung betrifft eine Anordnung mit mindestens zwei Generatorstäben für einen Ständer eines elektrischen Generators, die über ein jeweiliges Stabende elektrisch miteinander in Verbindung stehen. Die Erfindung betrifft ferner einen Ständerwickelkopf mit einer derartigen Anordnung. Darüber hinaus betrifft die Erfindung einen elektrischen Generator mit einem derartigen Ständerwickelkopf.

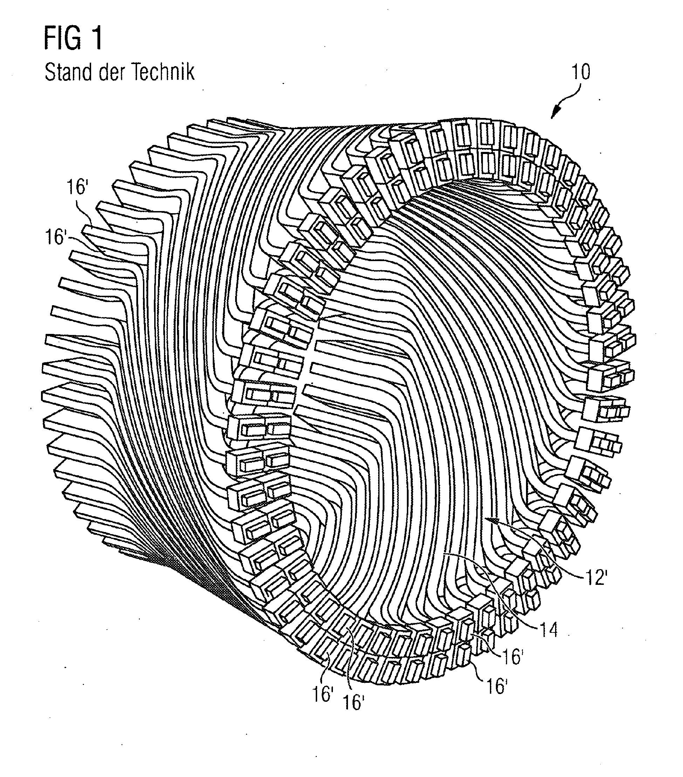

Ein aus dem Stand der Technik bekannter Ständerwickelkopf 10 für einen elektrischen Generator ist in Fig. 1 schematisch dargestellt. Ein elektrischer Generator besteht im Wesentlichen aus zwei Teilen, einem Ständer oder Stator als feststehendem Teil und einem innerhalb des Ständers angeordneten Rotor oder Läufer. Ein Ständerwickelkopf 10 des Ständers besteht aus einer Vielzahl von Generatorstäben 12', die elektrisch miteinander verschaltet sind. Jeder der Generatorstäbe 12' weist dabei jeweilige Stabenden 16', sowie eine dazwischen verlaufende Evolvente 14 auf. Die jeweiligen Generatorstäbe 12' weisen eine Vielzahl von Teilleitern auf, die miteinander verdrillt sind.

Bei der Herstellung eines Ständerwickelkopfs 10 werden im Stand der Technik eine Vielzahl von Generatorstäben 12' in entsprechende Nuten eines Blechpakets des Ständers eingelegt. Daraufhin werden die Stabenden 16' von jeweils zwei Generatorstäben 12' mit in entgegengesetzten Richtungen verschwenkten Evolventen mechanisch aufeinander ausgerichtet. Das heißt, die Stabenden 16' werden mit entsprechenden Werkzeugen in geeignete Stellungen gebogen. Daraufhin werden die jeweils aufeinander ausgerichteten Stabenden 16' mechanisch verbunden. Diese mechanische Verbindung wird gemäß dem Stand der Technik beispielsweise durch Verlöten oder durch Verschrauben mittels entsprechenden Verschraubungselementen bewerkstelligt.

In der US-A-4,385,254 wird eine Anordnung mit mindestens zwei Generatorstäben für einen Ständer eines elektrischen Generators offenbart.

Eine der Erfindung zugrunde liegende Aufgabe besteht darin, einen elektrischen Generator der eingangs genannten Art dahingehend zu verbessern, dass die Herstellung des Ständerwickelkopfes unaufwendiger und damit kostengünstiger erfolgen kann.

Diese Aufgabe ist erfindungsgemäß mit einer gattungsgemäßen Anordnung gemäß Anspruch 1 gelöst. Die Aufgabe ist ferner mit einem Ständerwickelkopf gelöst, welcher mit einer derartigen erfindungsgemäßen Anordnung versehen ist. Darüber hinaus ist die Aufgabe mit einem gattungsgemäßen elektrischen Generator gelöst, welcher einen derartigen erfindungsgemäßen Ständerwickelkopf aufweist.

Durch das erfindungsgemäße Verspannen der jeweiligen elektrisch miteinander in Verbindung stehenden Stabenden der mindestens zwei Generatorstäbe mittels eines Bandes entfällt ein aufwendiges manuelles Ausrichten der Stabenden vor Herstellung des elektrischen Kontaktes. Erfindungsgemäß erfolgt die genaue Ausrichtung der Stabenden zueinander durch das Verspannen mittels des Bandes. Diese Maßnahme verringert den Montageaufwand erheblich und verhindert auch die Gefahr einer mechanischen Überbeanspruchung der Stabenden durch nachträgliches Ausrichten.

Das Band umschließt die gegeneinander verspannten Stabenden vollständig. Das heißt, das Band ist von außen her um die zu verbindenden Stabenden herumgewickelt. Dadurch lassen sich die entsprechenden Stabenden mittels des Bandes gegeneinander verspannen.

Die Anordnung weist ein zwischen den gegeneinander verspannten Stabenden angeordnetes Spannelement zum Verspannen der Stabenden im Band auf. Mittels eines derartigen Spannelements können die Stabenden beim Verspannen genau aufeinander ausgerichtet werden. Dabei presst vorteilhafterweise das Spannelement die beiden Stabenden gegen die Wirkung des diese umschließenden Bandes auseinander und richtet so die Stabenden in geeigneter Weise aufeinander aus.

In vorteilhafter Ausführungsform ist das Spannelement keilförmig ausgebildet und weiterhin weist die Anordnung insbesondere eine Spannschraube, mittels der das Spannelement gegenüber den Stabenden zum Verspannen der Stabenden im Band verschiebbar ist, auf. Durch die keilförmige Ausbildung des Spannelements lassen sich die Stabenden durch einfaches Verschieben des Spannelements auf einfache Weise in das Band einspannen. Die derart gegeneinander verspannten Stabenden sind in diesem Zustand zur Herstellung einer elektrischen Verbindung ausreichend aufeinander ausgerichtet. Durch das Vorsehen einer Spannschraube zum Verschieben des Spannelements gegenüber den Stabenden lässt sich der Montagevorgang der Stabenden durch Verspannen mittels des keilförmigen Spannelements besonders einfach und damit zeitsparend ausführen.

Weiterhin ist es zweckmäßig, wenn das Spannelement elektrisch leitend ist. In diesem Fall kann die elektrisch leitende Verbindung zwischen den jeweiligen Generatorstabenden durch das Spannelement selbst hergestellt werden.

In vorteilhafter Ausführungsform sind die gegeneinander verspannten Stabenden jeweils zylinderförmig gestaltet. Diese Maßnahme erleichtert das Anbringen des Bandes an den Stabenden und weiterhin das Verspannen der Stabenden innerhalb des Bandes.

Vorteilhafterweise sind die gegeneinander verspannten Stabenden jeweils mit einer zumindest abschnittsweise abgerundeten, insbesondere zumindest abschnittsweise kreisförmigen Zylinderfläche gestaltet. Eine derartige zumindest teilweise kreiszylinderförmige Gestaltung der Stabenden erleichtert das Anbringen des Bandes und das darin Verspannen der Stabenden weiter.

In vorteilhafter Ausführungsform sind die gegeneinander verspannten Stabenden jeweils mit einer abgeflachten Anlagefläche zur Anlage eines Spannelements gestaltet. Damit ergibt sich eine besonders stabile Anlagefläche für das Spannelement an den Stabenden, wodurch der Montagevorgang zum Verbinden der Stabenden weiter erleichtert wird.

Nachfolgend ist ein Ausführungsbeispiel einer erfindungsgemäßen Anordnung mit mindestens zwei Generatorstäben für einen Ständer eines elektrischen Generators anhand der beigefügten schematischen Zeichnungen näher erläutert. Es zeigt:
- Fig. 1: eine perspektivische Ansicht eines aus dem Stand der Technik bekannten Ständerwickelkopfes für einen elektrischen Generator, sowie
- Fig. 2: eine perspektivische Ansicht einer Verbindung zweier Generatorstabenden gemäß einer Ausführungsform der Erfindung.

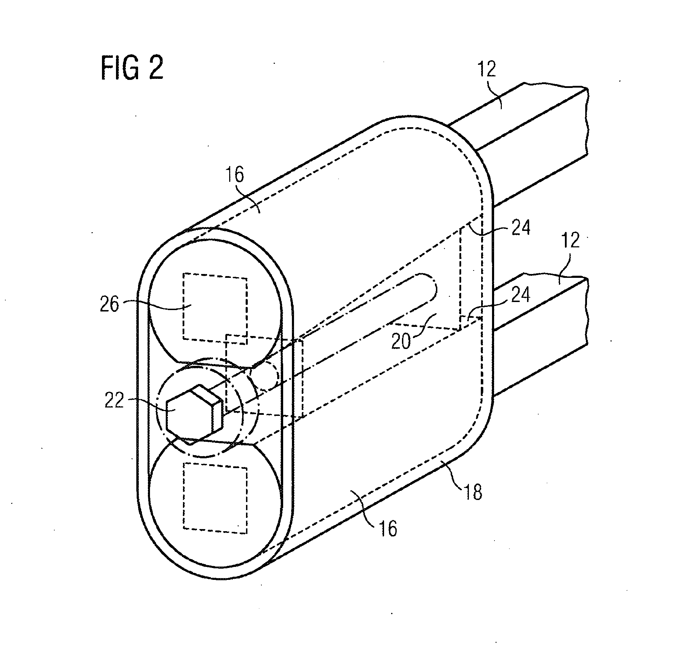

Fig. 2 zeigt eine erfindungsgemäße Ausführungsform einer Verbindung zweier Stabenden 16 jeweiliger Generatorstäbe 12 eines Ständerwickelkopfes 10 eines elektrischen Generators. An die dargestellten Stabenden 16 zweier Generatorstäbe 12 schließen sich in der Fig. 2 nicht dargestellte, in entgegengesetzte Richtungen laufende Evolventen 14 der jeweiligen Generatorstäbe 12 an. Diese Evolventen 14 sind in entsprechenden Nuten eines ebenfalls nicht dargestellten Blechpaketes des Ständerwickelkopfes 10 eingebettet. Die beiden dargestellten Stabenden 16 ragen aus dem Blechpaket heraus und sind von einem Band 18 umspannt.

Bei der Montage des Ständerwickelkopfes 10 wird das ringförmige Band über die Stabenden 16 gestülpt und daraufhin ein keilförmiges Spannelement 20 mittels einer Spannschraube 22 parallel zur Längsachse der Stabenden 16 verschoben. Durch die Verschiebung des Spannelements 20 werden die Stabenden 16 der Generatorstäbe 12 auseinander gepresst und dadurch in das Band 18 eingespannt. Die Stabenden 16 sind damit mittels des Bandes 18 gegeneinander verspannt. Das Spannelement 20 ist elektrisch leitend ausgeführt und stellt damit eine elektrische Verbindung zwischen den beiden Stabenden 16 der Generatorstäbe 12 her.

Die jeweiligen Stabenden 16 der beiden zugehörigen Generatorstäbe 12 weisen jeweils an den aneinander zugewandten Seiten eine abgeflachte Anlagefläche 24 zur Anlage des Spannelements 20 auf. Die zylinderförmig gestalteten Stabenden 16 sind damit mit einer an einer Stelle abgeflachten kreisförmigen Stirnfläche 26 gestaltet. Damit ergibt sich eine große Anlagefläche zwischen den Stabenden 16 und dem Spannelement, wodurch das Auseinanderpressen der Stabenden 16 beim Verspannen innerhalb des Bandes 18 erleichtert wird.

Durch die Verbindung der beiden Stabenden 16 der zugehörigen Generatorstäbe 12 gemäß der vorliegenden erfindungsgemäßen Ausführungsform entfällt ein mühsames Ausrichten der Stabenden 16 nach Einlegen der Generatorstäbe 12 in das Blechpaket. Eine wie im Stand der Technik durch ein nachträgliches Richten verursachte Gefahr der mechanischen Überbeanspruchung der Stabenden 16 wird damit vermieden.

Weiterhin ergibt sich bei einer Stabmontage gemäß der erfindungsgemäßen Ausführungsform gegenüber herkömmlichen Montageverfahren eine erhebliche Zeitersparnis.

## Patentansprüche

1. Anordnung mit mindestens zwei Generatorstäben (12) für einen Ständer eines elektrischen Generators,
die über ein jeweiliges Stabende (16) elektrisch miteinander in Verbindung stehen, wobei
die jeweiligen elektrisch miteinander in Verbindung stehenden Stabenden (16) der mindestens zwei Generatorstäbe (12) mittels eines Bandes (18) gegeneinander verspannt sind, wobei
das Band (18) die gegeneinander verspannten Stabenden (16) vollständig umschließt,
**gekennzeichnet durch**
ein zwischen den gegeneinander verspannten Stabenden (16) angeordnetes Spannelement (20) zum Verspannen der Stabenden (16) im Band (18).

2. Anordnung nach Anspruch 1,
**dadurch gekennzeichnet, dass**
das Spannelement (20) keilförmig ausgebildet ist und die Anordnung insbesondere eine Spannschraube (22) aufweist, mittels der das Spannelement (20) gegenüber den Stabenden (16) zum Verspannen der Stabenden (16) im Band (18) verschiebbar ist.

3. Anordnung nach Anspruch 1 oder 2,
**dadurch gekennzeichnet, dass**
das Spannelement (20) elektrisch leitend ist.

4. Anordnung nach einem der vorausgehenden Ansprüche,
**dadurch gekennzeichnet, dass**
die gegeneinander verspannten Stabenden (16) jeweils zylinderförmig gestaltet sind.

5. Anordnung nach Anspruch 4,
**dadurch gekennzeichnet, dass**
die gegeneinander verspannten Stabenden (16) jeweils mit einer zumindest abschnittsweise abgerundeten, insbesondere zumindest abschnittsweise kreisförmigen Zylinderfläche (26) gestaltet sind.

6. Anordnung nach Anspruch 4 oder 5,
**dadurch gekennzeichnet, dass**
die gegeneinander verspannten Stabenden (16) jeweils mit einer abgeflachten Anlagefläche (24) zur Anlage eines Spannelements (20) gestaltet sind.

7. Ständerwickelkopf für einen elektrischen Generator mit einer Anordnung nach einem der vorausgehenden Ansprüche.

8. Elektrischer Generator mit einem Ständerwickelkopf nach Anspruch 7.

## Claims

1. Arrangement having at least two generator bars (12) for a stator of an electrical generator,
which are electrically connected to one another via a respective bar end (16), with
the respective bar ends (16) which are electrically connected to one another of the at least two generator bars (12) being braced with respect to one another by means of a strip (18),
with
the strip (18) completely surrounding the mutually braced bar ends (16), **characterized by**
a clamping element (20), which is arranged between the mutually braced bar ends (16), for bracing the bar ends (16) in the strip (18).

2. Arrangement according to Claim 1,
**characterized in that**
the clamping element (20) is wedge-shaped and the arrangement in particular has a clamping screw (22) by means of which the clamping element (20) can be moved with respect to the bar ends (16) in order to brace the bar ends (16) in the strip (18).

3. Arrangement according to Claim 1 or 2,
**characterized in that**
the clamping element (20) is electrically conductive.

4. Arrangement according to one of the preceding claims,
**characterized in that**
the mutually braced bar ends (16) each have a cylindrical shape.

5. Arrangement according to Claim 4,
**characterized in that**
the mutually braced bar ends (16) each have a cylindrical surface (26) which is rounded at least in places, and in particular is circular at least in places.

6. Arrangement according to Claim 4 or 5,
**characterized in that**
the mutually braced bar ends (16) each have a flattened contact surface (24) for making contact with a clamping element (20).

7. Stator end winding for an electrical generator having an arrangement according to one of the preceding claims.

8. Electrical generator having a stator end winding according to Claim 7.

## Revendications

1. Agencement ayant au moins deux barres ( 12 ) de générateur pour un stator d'un générateur électrique,
qui sont en liaison entre elles électriquement par une extrémité ( 16 ) respective de barre, dans lequel les extrémités ( 16 ) respectives des barres en liaison entre elles électriquement des au moins deux barres ( 12 ) de générateur sont bloquées l'une par rapport à l'autre au moyen d'une bande ( 18 ), dans lequel
la bande ( 18 ) entoure complètement les extrémités ( 16 ) des barres bloquées l'une par rapport à l'autre,
**caractérisé par**
un élément ( 20 ) de blocage, qui est monté entre les extrémités ( 16 ) des barres bloquées l'une par rapport à l'autre et qui est destiné à bloquer les extrémités ( 16 ) des barres dans la bande ( 18 ).

2. Agencement suivant la revendication 1,
**caractérisé en ce que**
l'élément ( 20 ) de blocage est cunéiforme et l'agencement a notamment une vis ( 22 ) de serrage, au moyen de laquelle l'élément ( 20 ) de blocage peut être déplacé par rapport aux extrémités ( 16 ) des barres, pour bloquer les extrémités ( 16 ) des barres dans la bande ( 18 ).

3. Agencement suivant la revendication 1 ou 2,
**caractérisé en ce que**
l'élément ( 20 ) de serrage est conducteur de l'électricité.

4. Agencement suivant l'une des revendications précédentes, **caractérisé en ce que**
les extrémités ( 16 ) des barres bloquées l'une par rapport à l'autre sont respectivement de forme cylindrique.

5. Agencement suivant la revendication 4,
**caractérisé en ce que**
les extrémités ( 16 ) des barres bloquées l'une par rapport à l'autre sont conformées en ayant respectivement une surface ( 26 ) cylindrique arrondie, au moins par endroit, notamment de forme circulaire, au moins par endroit.

6. Agencement suivant la revendication 4 ou 5,
**caractérisé en ce que**
les extrémités ( 16 ) des barres bloquées l'une par rapport à l'autre sont conformées respectivement en ayant un méplat ( 24 ) d'application d'un élément ( 20 ) de blocage.

7. Tête de bobine statorique pour un générateur électrique ayant un agencement suivant l'une des revendications précédentes.

8. Générateur électrique ayant une tête de bobine statorique suivant la revendication 7.
